# DEMANDE DE BREVET EUROPEEN

(11) **EP 3 825 917 A1**
(43) Date de publication de la demande: **26.05.2021**
(21) Numéro de dépôt: 20206570.2
(22) Date de dépôt: 10.11.2020
(51) Int. Cl.: G06K 19/02, G06K 19/077

(54) **ETIQUETTE DE RADIO-IDENTIFICATION**

(30) Priorité: 19.11.2019 FR 1912885
(71) Demandeur: Commissariat à l'Energie Atomique et aux Energies Alternatives, 75015 Paris (FR)
(72) Inventeur: MARNAT, Loïc, 38054 GRENOBLE CEDEX 9 (FR); SIMON, Gilles, 38054 GRENOBLE CEDEX 9 (FR)
(74) Mandataire: Cabinet Beaumont

(57) **Abrégé**

La présente description concerne un dispositif électronique (318) comprenant : au moins une puce de radio-identification (302), enrobée par un bloc de résine (304) ; un capot (316) formant, avec le bloc de résine, au moins une encoche (320a, 320b) ; et au moins un élément de reprise de contact (314a, 314b), situé en surface du bloc de résine à l'intérieur de l'encoche.

## Description

### Domaine technique

La présente description concerne de façon générale les dispositifs électroniques, et plus particulièrement les étiquettes (tag) de radio-identification (Radio Frequency IDentification - RFID), ou « radio-étiquettes ».

### Technique antérieure

Une étiquette de radio-identification, ou étiquette RFID, est fréquemment apposée sur un objet afin, par exemple, d'assurer sa traçabilité, de le protéger contre des tentatives de vol, d'attester de son authenticité, etc. Une telle étiquette RFID comporte usuellement une antenne, reliée à une puce électronique. L'antenne de l'étiquette RFID permet par exemple à un lecteur d'alimenter électriquement la puce pour venir lire des données qui y sont stockées. Les données stockées par la puce sont typiquement des informations concernant l'objet sur lequel l'étiquette RFID est apposée.

Les étiquettes RFID et les puces qu'elles comportent ont actuellement atteint un niveau de miniaturisation important. Dans l'industrie textile, par exemple, il est désormais possible d'intégrer une étiquette RFID directement à l'intérieur des mailles ou des fils d'un vêtement. Cela permet, en particulier, de dissimuler l'étiquette RFID pour éviter qu'elle ne soit ôtée du vêtement par une personne malintentionnée.

La miniaturisation des étiquettes RFID s'avère toutefois problématique pour leur tenue mécanique, ainsi que pour la mise en œuvre des procédés actuels de fabrication de ces étiquettes.

### Résumé de l'invention

Il existe un besoin d'améliorer la tenue mécanique des étiquettes RFID actuelles et les procédés actuels de fabrication d'étiquettes RFID.

Un mode de réalisation pallie tout ou partie des inconvénients des étiquettes RFID connues et des procédés de fabrication d'étiquettes RFID connus.

Un mode de réalisation prévoit un dispositif électronique comprenant : au moins une puce de radio-identification, enrobée par un bloc de résine ; un capot formant, avec le bloc de résine, au moins une encoche ; et au moins un élément de reprise de contact, situé en surface du bloc de résine à l'intérieur de l'encoche.

Selon un mode de réalisation, le capot et le bloc de résine forment conjointement deux encoches comportant chacune au moins un élément de reprise de contact, le capot présentant, selon un plan de coupe perpendiculaire à la longueur des encoches, une section en forme de « T ».

Selon un mode de réalisation, le capot est en silicium.

Selon un mode de réalisation, le bloc de résine est en au moins un matériau polymère.

Selon un mode de réalisation, le capot est sur et en contact avec une couche de passivation située en surface du bloc de résine.

Selon un mode de réalisation, la puce présente : une longueur comprise entre 400 et 500 µm ; une largeur comprise entre 300 et 500 µm ; et une épaisseur comprise entre 50 et 100 µm.

Selon un mode de réalisation, le bloc de résine permet d'agrandir une surface de fixation du capot.

Selon un mode de réalisation, le bloc de résine permet de déporter latéralement des plots de connexion de la puce de radio-identification.

Selon un mode de réalisation, chaque encoche est destinée à recevoir un fil conducteur, contactant le ou les éléments de reprise de contact.

Un mode de réalisation prévoit une étiquette de radio-identification comportant : au moins un dispositif tel que décrit ; et au moins un fil conducteur, engagé à l'intérieur de la ou des encoches.

Selon un mode de réalisation, le ou les fils conducteurs forment une ou des antennes de la puce de radio-identification.

Un mode de réalisation prévoit un fil textile comprenant au moins une étiquette de radio-identification telle que décrite.

Un mode de réalisation prévoit un procédé de fabrication d'un dispositif tel que décrit.

Selon un mode de réalisation, le procédé comprend les étapes de :
positionner au moins une puce de radio-identification sur un premier support ;
enrober la puce de radio-identification dans un bloc de résine ;
reporter la puce sur un deuxième support à l'aide du premier support ;
mettre à nu des zones actives de la puce de radio-identification ;
déposer une couche diélectrique en surface du bloc de résine ;
réaliser au moins un plot de connexion et au moins un élément de reprise de contact ; et
coller un capot à l'aplomb du bloc de résine, de sorte à former au moins une encoche au niveau de l'élément de reprise de contact.

### Brève description des dessins

Ces caractéristiques et avantages, ainsi que d'autres, seront exposés en détail dans la description suivante de modes de réalisation et modes de mise en œuvre particuliers faite à titre non limitatif en relation avec les figures jointes parmi lesquelles :
La figure 1 est une vue schématique et en coupe d'un exemple d'assemblage d'une étiquette RFID comportant un capot ;
La figure 2 est une vue schématique d'un exemple de machine permettant d'assembler des fils d'antenne sur des étiquettes RFID ;
La figure 3 est une vue schématique, en perspective et en coupe, d'un mode de réalisation d'une étiquette RFID ;
La figure 4 est une vue schématique et en coupe d'une étape d'un mode de mise en œuvre d'un procédé de fabrication d'étiquettes RFID ;
La figure 5 est une vue schématique et en coupe d'une autre étape du mode de mise en œuvre d'un procédé de fabrication d'étiquettes RFID ;
La figure 6 est une vue schématique et en coupe d'encore une autre étape du mode de mise en œuvre d'un procédé de fabrication d'étiquettes RFID ;
La figure 7 est une vue schématique et en coupe d'encore une autre étape du mode de mise en œuvre d'un procédé de fabrication d'étiquettes RFID ;
La figure 8 est une vue schématique et en coupe d'encore une autre étape du mode de mise en œuvre d'un procédé de fabrication d'étiquettes RFID ;
La figure 9 est une vue schématique et en coupe d'encore une autre étape du mode de mise en œuvre d'un procédé de fabrication d'étiquettes RFID ;
La figure 10 est une vue schématique et en coupe d'encore une autre étape du mode de mise en œuvre d'un procédé de fabrication d'étiquettes RFID ;
La figure 11 est une vue schématique et en coupe d'encore une autre étape du mode de mise en œuvre d'un procédé de fabrication d'étiquettes RFID ;
La figure 12 est une vue schématique et en coupe d'encore une autre étape du mode de mise en œuvre d'un procédé de fabrication d'étiquettes RFID ;
La figure 13 est une vue schématique et en coupe d'encore une autre étape du mode de mise en œuvre d'un procédé de fabrication d'étiquettes RFID ;
La figure 14 est une vue de dessus, schématique et partielle, d'un autre mode de réalisation d'une étiquette RFID ;
La figure 15 est une vue schématique d'un mode de mise en œuvre d'un procédé d'intégration d'une étiquette RFID dans un fil textile ;
La figure 16A est une vue en perspective, schématique et partielle, d'un autre mode de réalisation d'une étiquette RFID ; et
La figure 16B est une vue de dessus, schématique et partielle, de l'étiquette RFID de la figure 16A.

### Description des modes de réalisation

De mêmes éléments ont été désignés par de mêmes références dans les différentes figures. En particulier, les éléments structurels et/ou fonctionnels communs aux différents modes de réalisation et modes de mise en œuvre peuvent présenter les mêmes références et peuvent disposer de propriétés structurelles, dimensionnelles et matérielles identiques.

Par souci de clarté, seuls les étapes et éléments utiles à la compréhension des modes de réalisation et modes de mise en œuvre décrits ont été représentés et sont détaillés. En particulier, les puces de radio-identification, ou puces RFID, et les procédés de fabrication de puces RFID ne sont pas décrits, l'invention étant compatible avec les puces RFID usuelles et avec les procédés usuels de fabrication de puces RFID.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures étant entendu que, en pratique, les dispositifs peuvent être orientés différemment.

Sauf précision contraire, les expressions "environ", "approximativement", "sensiblement", et "de l'ordre de" signifient à 10 % près, de préférence à 5 % près.

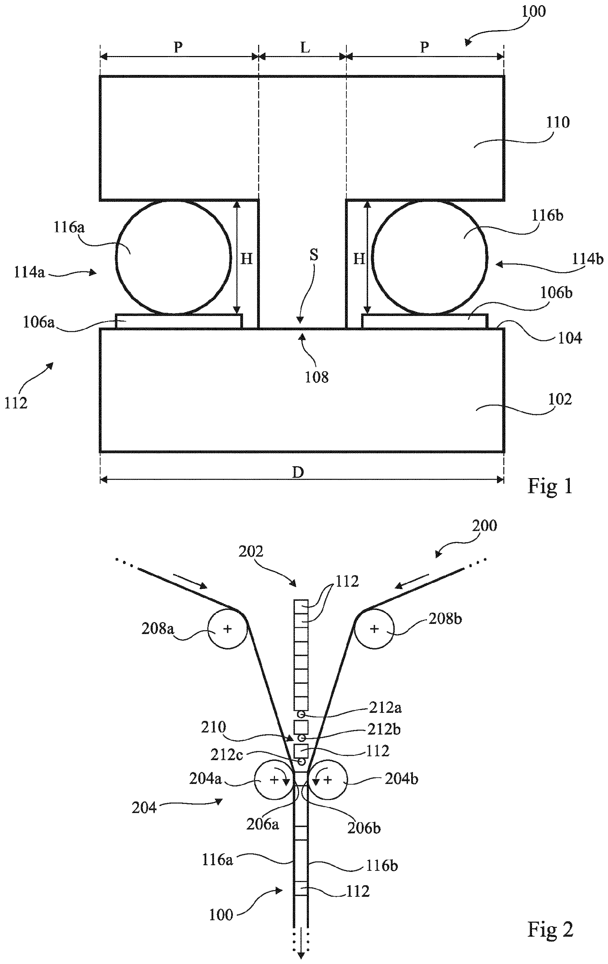

La figure 1 est une vue schématique et en coupe d'un exemple d'assemblage d'une étiquette 100 de radio-identification, ou étiquette RFID, comportant un capot.

Dans cet exemple, l'étiquette RFID 100 comporte une puce 102 de radio-identification, ou puce RFID. La puce RFID 102 est symbolisée, en figure 1, par un rectangle. Sur une face 104 de la puce 102 (la face supérieure de la puce 102, dans l'orientation de la figure 1) affleurent deux plots de connexion 106a et 106b de la puce 102. Les plots de connexion 106a et 106b de la puce 102 sont, par exemple, reliés ou connectés à un circuit de communication radiofréquence de la puce 102, non représenté en figure 1.

Les plots de connexion 106a et 106b sont, par exemple, respectivement situés à proximité de deux faces latérales opposées de la puce RFID 102, les faces latérales gauche et droite de la puce 102, dans l'orientation de la figure 1. Comme illustré en figure 1, une zone 108 de la face 104 de la puce 102 sépare les plots de connexion 106a et 106b.

Dans l'exemple de la figure 1, l'étiquette RFID 100 comporte, en outre, un capot 110 solidaire de la puce 102. Le capot 110 présente, par exemple, une section en forme de « T ». Comme illustré en figure 1, la surface inférieure de la portion verticale du « T » formé par le capot 110 est fixée sur au moins une partie de la zone 108 de la face 104 de la puce 102. Le capot 110 est centré par rapport à la face 104 de la puce 102. La portion horizontale du « T » formé par le capot 110 est située en regard des plots de connexion 106a et 106b de la puce 102, et possède des dimensions latérales similaires à celles de la puce 102.

La puce RFID 102 et le capot 110 forment conjointement une structure 112. Comme illustré en figure 1, la structure 112 possède une section en forme de « I », dont la portion horizontale inférieure est constituée par la puce 102 et dont la portion verticale et la portion horizontale supérieure sont constituées par le capot 110. Dans cet exemple, deux encoches 114a et 114b ou rainures, situées de part et d'autre de la portion verticale du « I » formé par la structure 112, séparent verticalement les plots de connexion 106a et 106b du capot 110.

Dans l'exemple de la figure 1, l'étiquette RFID 100 comporte, en outre, deux fils d'antenne 116a et 116b. Les fils d'antenne 116a et 116b s'insèrent respectivement dans les encoches 114a et 114b de la structure 112. Le capot 110 maintient les fils 116a et 116b en contact avec les plots de connexion 106a et 106b de la puce RFID 102.

Les fils 116a et 116b sont, par exemple, sensiblement parallèles entre eux et sensiblement parallèles à la face 104 de la puce 102. Dans l'exemple de la figure 1, chaque fil d'antenne 116a, 116b présente une section circulaire. Les fils 116a et 116b sont soudés aux plots 106a et 106b. Les fils 116a et 116b se prolongent selon une direction perpendiculaire au plan de coupe de la figure 1, sur une longueur excédant les dimensions de la puce 102 et du capot 110. Les fils d'antenne 116a, 116b se prolongent, par exemple, sur une longueur de quelques dizaines de centimètres.

Dans la suite de la description, on désigne par hauteur, notée H, des encoches 114a et 114b la distance entre les plots 106a, respectivement 106b, et le capot 110. En outre, on désigne par longueur des encoches 114a et 114b la dimension des encoches 114a et 114b mesurée parallèlement à l'axe des fils 116a et 116b, autrement dit la longueur des encoches 114a et 114b perpendiculaire au plan de coupe de la figure 1.

Les encoches 114a et 114b de la structure 112, vues en coupe en figure 1, présentent sensiblement une même profondeur, notée P. Comme illustré en figure 1, la profondeur P des encoches 114a et 114b est mesurée selon une direction perpendiculaire aux hauteur et longueur des encoches 114a et 114b.

On fait généralement en sorte que la profondeur P des encoches 114a et 114b de la structure 112 soit suffisamment grande pour permettre d'y engager totalement les fils 116a et 116b. En particulier, comme cela est illustré dans la vue en coupe de la figure 1, la profondeur P est supérieure au diamètre des fils 116a et 116b. Cela permet notamment de centrer les fils 116a et 116b par rapport aux plots 106a et 106b de la puce 102, par exemple pour obtenir un bon contact électrique. Cela permet également d'obtenir un maintien mécanique satisfaisant, notamment afin d'éviter que les fils 116a et 116b ne sortent des encoches 114a et 114b.

On note L la largeur de la surface de contact, notée S, entre le capot 110 et la puce 102. Dans l'exemple de la figure 1, la largeur L correspond à la largeur de la surface inférieure de la partie verticale du « T » formé par le capot 110, en contact avec tout ou partie de la zone 108 de la face 104 de la puce 102. Comme illustré en figure 1, la largeur L de la surface S dépend de la profondeur P des encoches 114a, 114b et d'une dimension latérale, notée D, de la puce 102.

Pour simplifier, on considère que la puce 102 possède, vue de dessus, une forme carrée de côté D. Dans ce cas, la surface S de contact entre le capot 110 et la zone 108 de la face 104 de la puce 102 présente une forme rectangulaire de longueur D, de largeur L et d'aire égale à L x D.

Une réduction de la taille de la puce 102, par exemple une réduction de la dimension D de la puce 102, provoque, à profondeur P identique, une diminution de la surface S de contact entre la puce 102 et le capot 110. Une telle réduction de la surface S tend à fragiliser la fixation du capot 110 sur la puce 102, donc la structure 112 de l'étiquette RFID 100.

Afin de compenser la diminution de la dimension D et éviter de réduire l'aire de la surface S, on pourrait penser diminuer la profondeur P des encoches 114a et 114b, mais cela conduirait notamment à réduire la surface des plots de connexion 106a et 106b. On risquerait alors d'obtenir un mauvais contact électrique entre les fils 116a, 116b et les plots 106a et 106b. De plus, une diminution de la profondeur P pourrait dégrader le maintien mécanique des fils d'antenne 116a et 116b. En particulier, des fils 116a et 116b situés trop proches de la périphérie de la structure 112 seraient susceptibles d'être accidentellement extraits hors de leurs encoches respectives 114a, 114b pendant l'utilisation de l'étiquette RFID 100.

La puce RFID 102 et le capot 110 sont par exemple assemblés en mettant en œuvre une technologie connue sous la dénomination commerciale « E-Thread », brièvement exposée ci-dessous en relation avec la figure 2.

La figure 2 est une vue schématique d'un exemple de machine 200 permettant d'assembler des fils d'antenne sur des étiquettes RFID dans le cadre de la technologie E-Thread. La machine 200 permet, par exemple, d'insérer les fils 116a et 116b à l'intérieur des rainures 114a et 114b de la structure 112. Un tel exemple est décrit dans la demande de brevet n° 2390194, qui est incorporée par référence dans la mesure où cela est autorisé par la loi.

Dans l'exemple de la figure 2, une série de structures 112, comprenant chacune la puce 102 et le capot 110 (figure 1), sont mises en attente dans une zone d'entrée 202 de la machine 200 d'assemblage. En pratique, la zone d'entrée 202 peut comporter une rainure adaptée aux dimensions latérales des structures 112, par exemple une rainure de largeur supérieure à la dimension latérale D de la puce 102. Les structures 112 sont rangées dans la zone d'entrée 202 de sorte que leurs encoches 114a, 114b sont alignées les unes par rapport aux autres.

Un dispositif de pincement 204, comprenant par exemple deux rouleaux cylindriques 204a et 204b contrarotatifs, est placé au bas de la zone 202, dans l'orientation de la figure 2. Le dispositif de pincement 204 est, par exemple, un dispositif passif dont les rouleaux 204a et 204b sont éloignés l'un de l'autre par une distance sensiblement constante. Les axes de rotation des rouleaux 204a et 204b sont sensiblement perpendiculaires aux fils 116a et 116b. Comme illustré en figure 2, deux surfaces opposées 206a et 206b des rouleaux 204a et 204b sont séparées par une distance approximativement égale à la dimension latérale D (figure 1) de la structure 112.

Les fils 116a et 116b sont par exemple respectivement déroulés depuis des bobines, non représentées, le long de rouleaux auxiliaires 208a et 208b. Les fils 116a et 116b sont ensuite mis en contact avec les surfaces opposées 206a et 206b des rouleaux 204a et 204b. En sortie de la machine 200, les fils 116a et 116b sont maintenus parallèles entre eux, à une distance inférieure à la dimension latérale D de la puce 102 de chaque structure 112. Les rouleaux auxiliaires 208a et 208b permettent de guider les fils 116a et 116b vers le dispositif de pincement 204 de façon à éviter d'éventuelles interférences avec les structures 112 présentes dans la zone d'entrée 202.

Un dispositif 210, disposé entre la zone d'entrée 202 et le dispositif de pincement 204, permet de réguler le passage des structures 112 entre les rouleaux 204a et 204b. Dans l'exemple de la figure 2, le dispositif 210 comprend trois doigts 212a, 212b et 212c permettant notamment de séparer les structures 112 et de les faire passer l'une après l'autre dans le dispositif de pincement 204.

À mesure qu'une structure 112 approche des rouleaux 204a et 204b, les fils 116a et 116b s'engagent progressivement à l'intérieur des encoches 114a et 114b. Le dispositif 210 pousse alors la structure 112 entre les surfaces opposées 206a et 206b. Cela a pour effet de forcer l'introduction des fils 116a et 116b dans les encoches 114a et 114b, sur toute la longueur des encoches 114a et 114b, à mesure que la structure 112 passe entre les rouleaux 204a et 204b. Des opérations ultérieures peuvent être prévues, par exemple pour souder les fils 116a, 116b aux plots de connexion 106a, 106b correspondants.

En sortie de la machine 200, on obtient ainsi un « chapelet » de structures 112 assemblées avec les fils d'antenne 116a et 116b, que l'on peut ensuite séparer afin d'obtenir des étiquettes RFID 100 individuelles.

L'un des rouleaux 204a, 204b est, par exemple, monté sur une glissière, non représentée, et rapproché de l'autre rouleau par un ressort de rappel, non représenté. On améliore ainsi la tolérance de la machine 200 en évitant, par exemple, de détériorer des structures 112 possédant une dimension latérale supérieure à la dimension D.

Une réduction de la taille de la puce 102 tend à compliquer l'utilisation de la machine d'assemblage 200. En particulier, plus la puce 102 est petite, plus la surface 108 de report du capot 110 est étroite. De ce fait, le capot 110 est davantage susceptible de se désolidariser de la puce 102 sous l'effet, par exemple, de contraintes mécaniques appliquées par les rouleaux 204a, 204b sur la structure 112 lors de l'insertion des fils 116a et 116b dans les encoches 114a et 114b. On dégrade ainsi également la tenue mécanique de l'étiquette 100 lors de son utilisation.

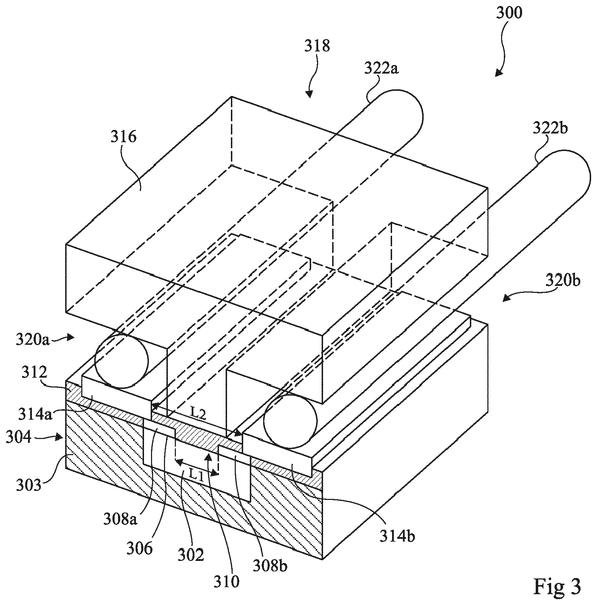

La figure 3 est une vue schématique, en perspective et en coupe, d'un mode de réalisation d'une étiquette RFID 300.

L'étiquette RFID 300 comporte une puce RFID 302 analogue à la puce RFID 102 telle que décrite en relation avec la figure 1. Selon un mode de réalisation, la puce RFID 302 est enrobée par une portion 303 d'un bloc de résine 304. La portion 303 du bloc de résine 304 est constitué d'au moins un matériau polymère. La puce RFID 302 est, de préférence, enrobée par la portion 303 du bloc de résine 304, de sorte que ses faces latérales et inférieure sont totalement entourées par la portion 303 du bloc de résine 304. Comme illustré en figure 3, la face supérieure de la portion 303 du bloc de résine 304 affleure une face 306 de la puce 302 (la face supérieure de la puce 302, dans l'orientation de la figure 3).

Selon un mode de réalisation, la puce 302 de l'étiquette RFID 300 présente :
une longueur comprise entre 300 et 500 µm, par exemple égale à 464 µm ;
une largeur comprise entre 300 et 500 µm, par exemple égale à 442 µm ; et
une épaisseur comprise entre 200 et 300 µm.

Selon un mode de réalisation préféré, la puce 302 de l'étiquette RFID 300 est amincie de manière à obtenir une puce 302 présentant une épaisseur comprise entre 50 et 100 µm, par exemple égale à 70 µm.

La puce RFID 302 comporte, sur sa face 306, deux plots de connexion 308a et 308b. Les plots de connexion 308a et 308b de la puce 302 peuvent être reliés ou connectés à un circuit de communication radiofréquence de la puce 302, non représenté en figure 3. Les plots de connexion 308a et 308b de la puce 302 sont respectivement situés à proximité de deux faces latérales opposées de la puce RFID 302 (les faces latérales gauche et droite de la puce 302, dans l'orientation de la figure 3).

Le bloc de résine 304 comporte, en outre, une couche de passivation 312. Selon un mode de réalisation, la couche de passivation 312 est située sur et en contact avec la face supérieure de la portion 303 du bloc de résine 304. Deux éléments de reprise de contact 314a et 314b affleurent la couche de passivation 312. Les éléments de reprise de contact 314a et 314b sont respectivement connectés aux plots de connexion 308a et 308b de la puce 302.

Selon un mode de réalisation, les éléments de reprise de contact 314a et 314b sont respectivement situés à proximité de deux faces latérales opposées du bloc de résine 304 (les faces latérales gauche et droite du bloc de résine 304, dans l'orientation de la figure 3). Les éléments de reprise de contact 314a et 314b permettent de déporter latéralement, en surface du bloc de résine 304, les plots de connexion 308a et 308b de la puce 302.

Comme illustré en figure 3, les éléments de reprise de contact 314a et 314b chevauchent partiellement les plots de connexion 308a et 308b de la puce 302. En particulier, dans l'orientation de la figure 3, l'élément de reprise de contact 314a est sur et en contact avec une portion de surface supérieure du plot de connexion 308a et se prolonge latéralement vers la face latérale gauche du bloc de résine 304. De façon analogue, toujours dans l'orientation de la figure 3, l'élément de reprise de contact 314b est sur et en contact avec une portion de surface supérieure du plot de connexion 308b et se prolonge latéralement vers la face latérale droite du bloc de résine 304.

En variante, les éléments de reprise de contact 314a et 314b ne chevauchent pas les plots de connexion 308a et 308b de la puce 302. Le cas échéant, chaque élément de reprise de contact 314a, 314b est connecté au plot de connexion 308a, 308b associé par au moins une piste conductrice (non représentée en figure 3).

Dans l'exemple représenté, la puce 302 est entourée ou revêtue, sur toutes ses faces, par le bloc de résine 304 et la couche de passivation 312, à l'exception de zones de contact avec les éléments de reprise de contact 314a et 314b. Plus précisément, dans l'orientation de la figure 3 :
la résine du bloc 304 revêt intégralement la face inférieure et les faces latérales de la puce 302 ; et
la couche de passivation 312 revêt intégralement la face supérieure de la puce 302, à l'exception de zones des faces supérieures des plots de connexion 308a et 308b de la puce 302 revêtues par les éléments de reprise de contact 314a et 314b.

Dans l'exemple de la figure 3, l'étiquette RFID 300 comporte, en outre, un capot 316. Le capot 316 est solidaire du bloc de résine 304 enrobant la puce RFID 302. Plus précisément, comme illustré en figure 3, le capot 316 est solidaire de la couche de passivation 312 du bloc de résine 304. Selon un mode de réalisation, le capot 316 présente une section en forme de « T ». Le capot 316 est, de préférence, en silicium.

À titre d'exemple, le capot 316 est fixé sur la couche de passivation 312 du bloc de résine 304 par un matériau adhésif, par exemple une colle. Ce matériau adhésif est par exemple choisi en fonction du matériau du capot 316. En outre, la couche de passivation 312 est par exemple en un matériau choisi en fonction du matériau adhésif. Cela permet notamment de favoriser l'adhérence de la colle sur la couche de passivation 312. On améliore ainsi la robustesse mécanique du collage du capot 316 sur le bloc de résine 304.

Dans un cas où la puce 302 présente des dimensions latérales inférieures à celles du capot, par exemple une face supérieure 306 deux à dix fois moins étendue que la face supérieure du bloc de résine 304, les effets de la dilatation thermique du bloc 304 sont prépondérants par rapport à ceux de la puce 302. Dans ce cas, on choisit la résine du bloc 304 de sorte qu'elle présente par exemple un coefficient de dilatation thermique proche de celui du matériau du capot 316, par exemple sensiblement égal à celui du matériau du capot 316.

Par rapport à un cas où le capot 316 serait fixé directement sur la puce 302, le fait de fixer le capot 316 sur le bloc de résine 304 permet ainsi d'élargir les choix de matériaux possibles pour le capot 316 et/ou le bloc 304. On facilite ainsi la réalisation de l'étiquette RFID 300 tout en garantissant une robustesse mécanique optimale.

Comme illustré en figure 3, la surface inférieure de la portion verticale du « T » formé par le capot 316 est fixée entre les éléments de reprise de contact 314a et 314b. Le capot 316 est centré par rapport au bloc de résine 304. La portion horizontale du « T » formé par le capot 316 est située en regard des éléments de reprise de contact 314a et 314b, et possède des dimensions latérales similaires à celles du bloc de résine 304.

Le bloc de résine 304 et le capot 316 forment conjointement une structure 318. Comme illustré en figure 3, la structure 318 possède une section en forme de « I », dont la portion horizontale inférieure est constituée par le bloc de résine 304 et dont la portion verticale et la portion horizontale supérieure sont constituées par le capot 316. Dans cet exemple, deux encoches 320a et 320b ou rainures, situées de part et d'autre de la portion verticale du « I » formé par la structure 318, séparent verticalement les éléments de reprise de contact 314a, 314b du capot 316.

Selon un mode de réalisation, l'étiquette RFID 300 comporte, en outre, deux fils d'antenne 322a et 322b. Les fils d'antenne 322a et 322b s'insèrent respectivement dans les encoches 320a et 320b de la structure 318. Le capot 316 maintient les fils 322a et 322b en contact avec les éléments de reprise de contact 314a et 314b de la puce RFID 302.

Les fils 322a et 322b sont, de préférence, sensiblement parallèles entre eux et sensiblement parallèles à la face supérieure du bloc de résine 304. Dans l'exemple de la figure 3, chaque fil d'antenne 322a, 322b présente une section circulaire. Les fils 322a et 322b se prolongent selon une direction perpendiculaire au plan de coupe de la figure 3, sur une longueur excédant les dimensions du bloc de résine 304 et du capot 316. À des fins de clarté, seule une portion de chaque fil conducteur 322a, 322b a été représentée en figure 3, étant entendu que, en pratique, chaque fil 322a, 322b peut présenter une longueur supérieure à ce qui est illustré en figure 3.

Comme illustré en figure 3, les plots de connexion 308a et 308b de la puce 302 sont séparés par une distance L1, et les éléments de reprise de contact 314a et 314b sont séparés par une distance L2. Selon un mode de réalisation préféré, on fait en sorte que la distance L2 soit supérieure à la distance L1.

En variante, la puce 302 de l'étiquette RFID 300 comporte un seul plot de connexion, par exemple le plot de connexion 308b. Le cas échéant, l'élément de reprise de contact 314a, l'encoche 320a et le fil d'antenne 322a peuvent être omis. La forme du capot 316 peut alors être modifiée pour maximiser la surface de contact avec la couche de passivation 312 de sorte que la structure 318 présente une forme de « C ».

Un avantage de l'étiquette RFID 300 réside dans le fait que la présence du bloc de résine 304 permet, pour venir fixer le capot 316 au-dessus de la puce RFID 302, de bénéficier d'une surface plus importante qu'une portion 310 de surface supérieure 306 de la puce 302 située entre les plots 308a et 308b. Cela permet notamment d'améliorer la tenue mécanique de la structure 318 lors de l'insertion des fils 322a et 322b dans les encoches 320a et 320b, ainsi que durant l'utilisation de l'étiquette RFID 300.

Un autre avantage de l'étiquette RFID 300 réside dans le fait que les éléments de reprise de contact 314a et 314b possèdent chacun une surface supérieure plus grande que la surface supérieure des plots de connexion 308a et 308b de la puce 302. Cela permet notamment d'améliorer le contact électrique et la tenue mécanique entre chaque fil d'antenne 322a, 322b et l'élément de reprise de contact 314a, 314b qui lui est associé.

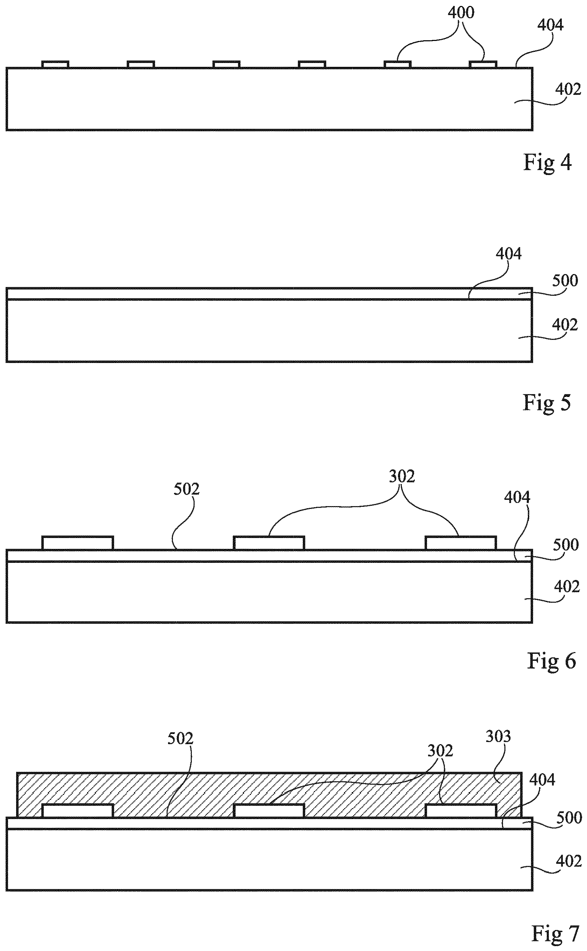

Les figures 4 à 13 ci-dessous illustrent des étapes successives d'un même mode de mise en œuvre d'un procédé de réalisation d'étiquettes RFID, par exemple d'étiquettes RFID 300 (figure 3).

La figure 4 est une vue schématique et en coupe d'une étape du mode de mise en œuvre du procédé de fabrication d'étiquettes RFID.

Au cours de cette étape, des repères d'alignement 400 sont réalisés sur un support 402. Les repères d'alignement 400 sont notamment destinés à permettre de placer précisément des puces sur le support 402 au cours d'une étape ultérieure. Les repères d'alignement 400 sont, par exemple, des plots réalisés en surface 404 du support 402 (la face supérieure du support 402, dans l'orientation de la figure 4) ou des repères optiques. Selon un mode de mise en œuvre, le support 402 est une plaquette de silicium ou un morceau de plaquette de silicium. En variante, le support 402 est constitué de verre. De manière plus générale, le support 402 est constitué d'un matériau compatible avec une utilisation en salle blanche et permettant d'assurer une fonction de support mécanique. Le support 402 possède, de préférence, une épaisseur d'environ 500 µm.

À des fins de clarté, les repères d'alignement 400 ne sont pas représentés dans les figures 5 à 13 ci-dessous.

La figure 5 est une vue schématique et en coupe d'une autre étape du mode de mise en œuvre du procédé de fabrication d'étiquettes RFID, réalisée à partir de la structure telle que décrite en relation avec la figure 4.

Au cours de cette étape, un film 500 est placé en surface 404 du support 402. Selon un mode de mise en œuvre, le film 500 est un film adhésif double face. Le film 500 est, de préférence, un film adhésif double face pouvant être décollé sous l'effet de la chaleur, par exemple un film connu sous la dénomination commerciale « REVALPHA » de la société Nitto.

Selon un mode de mise en œuvre, le film 500 est collé sur la totalité de la surface supérieure 404 du support 402. Selon un autre mode de mise en œuvre, le film 500 est collé sur une partie de la surface supérieure 404 du support 402, en particulier à des endroits de la surface 404 destinés à recevoir des puces lors d'une étape ultérieure.

La figure 6 est une vue schématique et en coupe d'encore une autre étape du mode de mise en œuvre du procédé de fabrication d'étiquettes RFID, réalisée à partir de la structure telle que décrite en relation avec la figure 5.

Au cours de cette étape, des puces électroniques nues (die), par exemple les puces RFID 302 (figure 3), sont disposées en surface 502 du film adhésif 500. Selon un mode de mise en œuvre, les puces 302 sont positionnées en surface 502 du film 500 grâce aux repères d'alignement 400 (figure 4), non visibles en figure 6 car recouverts par le film adhésif 500. Pour simplifier, seules trois puces 302 ont été représentées en figure 6 étant donné que, en pratique, la surface 502 du film 500 peut recevoir un nombre quelconque de puces 302.

Selon un mode de mise en œuvre, la zone active des puces 302 est placée en contact avec la surface 502 du film 500. Les puces 302 possèdent une épaisseur par exemple égale à environ 70 µm, de préférence égale à 70 µm. Selon un mode de mise en œuvre, les puces 302 subissent, préalablement à leur positionnement en surface 502 du film 500, des étapes (non représentées) de découpage avant meulage (dicing before grinding) et de relaxation de contraintes par plasma (plasma stress release).

La figure 7 est une vue schématique et en coupe d'encore une autre étape du mode de mise en œuvre du procédé de fabrication d'étiquettes RFID, réalisée à partir de la structure telle que décrite en relation avec la figure 6.

Au cours de cette étape, on encapsule les puces 302 situées en surface 502 du film adhésif 500. Selon un mode de mise en œuvre, les puces 302 sont encapsulées par moulage par compression (compression molding). Un bloc d'encapsulation, par exemple la portion 303 du bloc de résine 304 (figure 3), est ainsi réalisé en surface 502 du film adhésif 500. Le bloc d'encapsulation 303 recouvre intégralement les puces 302. Le bloc d'encapsulation 303 possède une épaisseur comprise entre 200 et 400 µm, par exemple égale à 300 µm.

Selon un mode de mise en œuvre préféré, le bloc d'encapsulation 303 est réalisé par moulage par compression d'une résine polymère liquide déposée en surface 502 du film adhésif 500 de manière à recouvrir intégralement les puces 302. Le bloc d'encapsulation 303, ainsi moulé autour des puces 302, est ensuite soumis à une étape de durcissement post-moulage (post molding curing).

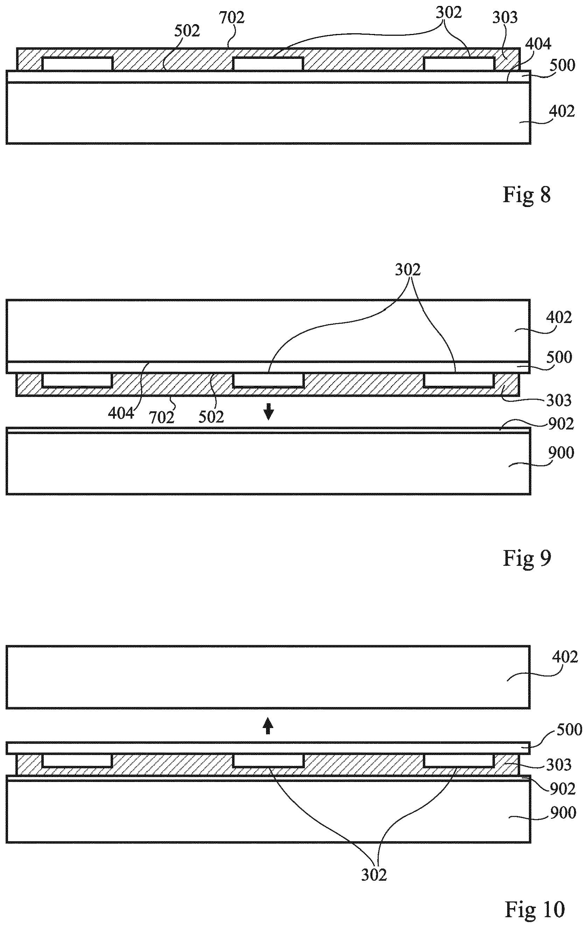

La figure 8 est une vue schématique et en coupe d'encore une autre étape du mode de mise en œuvre du procédé de fabrication d'étiquettes RFID, réalisée à partir de la structure telle que décrite en relation avec la figure 7.

Au cours de cette étape, on amincit le bloc d'encapsulation 303. Selon un mode de réalisation, l'amincissement du bloc d'encapsulation 303 est réalisé par rectification époxy (epoxy grinding). Dans l'exemple où les puces 302 possèdent une épaisseur égale à 70 µm et où le bloc d'encapsulation 303 possède initialement une épaisseur égale à 300 µm, le bloc d'encapsulation 303 est aminci jusqu'à obtenir une épaisseur d'environ 100 µm.

Comme illustré en figure 8, le bloc d'encapsulation 303 aminci recouvre encore intégralement les puces 302. Plus précisément, dans l'exemple où la hauteur des puces est égale à 70 µm et où le bloc d'encapsulation 303 a été aminci de 200 µm, une épaisseur de 30 µm sépare encore chaque puce 302 de la surface 702 du bloc d'encapsulation 303.

La figure 9 est une vue schématique et en coupe d'encore une autre étape du mode de mise en œuvre du procédé de fabrication d'étiquettes RFID, réalisée à partir de la structure telle que décrite en relation avec la figure 8.

Au cours de cette étape, on retourne la structure obtenue à l'issue de l'étape décrite en relation avec la figure 8. Plus précisément, la structure comportant le support 402, le film adhésif 500, les puces 302 et le bloc d'encapsulation 303 est retournée de sorte que la surface 702 du bloc d'encapsulation 303 soit orientée vers le bas comme illustré en figure 9.

Au cours de cette étape, la surface 702 du bloc d'encapsulation 303 est ensuite mise en contact avec un autre support 900 dont la surface supérieure a préalablement été recouverte par une couche 902 de liaison, de préférence temporaire. Le support 900 est, par exemple, une plaquette de silicium ou un morceau de plaquette de silicium. En variante, le support 900 est constitué de verre. De manière plus générale, le support 900 peut être similaire au support 402. Le support 900 peut notamment présenter des dimensions approximativement égales à celles du support 402 et une composition semblable à celle du support 402. Le support 900 est, de préférence, aligné par rapport au support 402.

Selon un mode de mise en œuvre, la couche 902 permet de créer, entre le support 900 et le bloc d'encapsulation 303, une liaison plus forte qu'entre le film adhésif 500 et le support 402 et qu'entre le film adhésif 500 et le bloc d'encapsulation 303. La couche 902 est, par exemple, une couche de colle. La couche 902 est alors de préférence une couche de colle temporaire dont l'adhésion est maîtrisée afin de pouvoir être libérée par un traitement thermique ou chimique. En variante, la couche 902 est une couche d'adhésif double face pouvant être décollée sous l'effet de la chaleur, par exemple un film connu sous la dénomination commerciale « REVALPHA » de la société Nitto. Le cas échéant, la couche 902 possède, de préférence, une température de libération différente de celle du film 500.

La figure 10 est une vue schématique et en coupe d'encore une autre étape du mode de mise en œuvre du procédé de fabrication d'étiquettes RFID, réalisée à partir de la structure telle que décrite en relation avec la figure 9.

Au cours de cette étape, on décolle ou on détache le support 402 du film 500. Après retrait du support 402, on obtient une structure constituée (de bas en haut, dans l'orientation de la figure 10) :
du support 900 ;
de la couche de liaison 902 ;
du bloc d'encapsulation 303 recouvrant intégralement les puces 302 ; et
du film adhésif 500.

En d'autres termes, les étapes décrites en relation avec les figures 9 et 10 permettent de reporter les puces 302 depuis le support 402 vers le support 900.

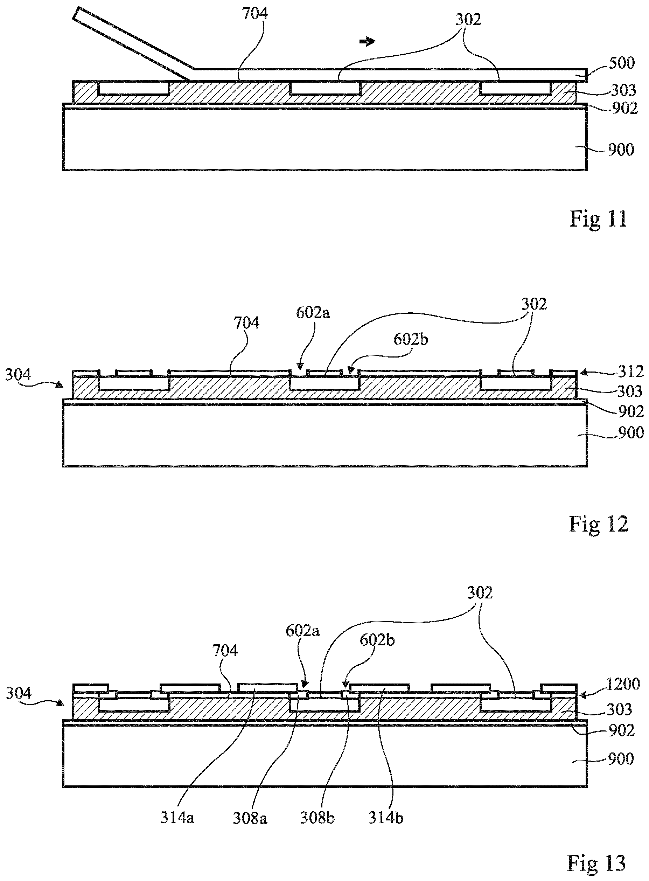

La figure 11 est une vue schématique et en coupe d'encore une autre étape du mode de mise en œuvre du procédé de fabrication d'étiquettes RFID, réalisée à partir de la structure telle que décrite en relation avec la figure 10.

Au cours de cette étape, on décolle le film adhésif 500 recouvrant une surface 704 du bloc d'encapsulation 303 (la surface supérieure du bloc d'encapsulation 303, dans l'orientation de la figure 11). On met ainsi à nu la surface 704 du bloc d'encapsulation 303 ainsi que les zones actives des puces 302.

Selon un mode de mise en œuvre, le retrait du film adhésif 500 est effectué par chauffage. Au cours de cette étape, on élimine également un éventuel excédent de colle se trouvant en surface 704 du bloc d'encapsulation 303 et/ou en surface des puces 302.

La figure 12 est une vue schématique et en coupe d'encore une autre étape du mode de mise en œuvre du procédé de fabrication d'étiquettes RFID, réalisée à partir de la structure telle que décrite en relation avec la figure 11.

Au cours de cette étape, on forme une couche diélectrique en matériau polymère en surface 704 du bloc d'encapsulation 303. Selon un mode de mise en œuvre, cette couche diélectrique est la couche de passivation 312 (figure 3). La couche 312 est une couche discontinue recouvrant la surface 704 du bloc d'encapsulation 303 et une portion de la surface supérieure de chaque puce 302. En particulier, des zones 602a et 602b de connexion des puces 302 ne sont pas recouvertes par la couche 312. La couche 312 et le bloc 303 forment conjointement le bloc de résine 304 tel que décrit en relation avec la figure 3.

La figure 13 est une vue schématique et en coupe d'encore une autre étape du mode de mise en œuvre du procédé de fabrication d'étiquettes RFID, réalisée à partir de la structure telle que décrite en relation avec la figure 12.

Au cours de cette étape, on réalise une ou plusieurs couches de redistribution (redistribution layer - RDL) du côté de la surface 704 du bloc d'encapsulation 303. Selon un mode de mise en œuvre, on réalise ainsi les plots de connexion 308a, 308b au droit des zones de connexion 602a, 602b de chaque puce 302. On réalise en outre les éléments de reprise de contact 314a, 314b associés, chaque élément de reprise de contact 314a, 314b chevauchant partiellement le plot de connexion 308a, 308b correspondant et se prolongeant en surface de la couche diélectrique 312.

Selon un mode de mise en œuvre, la ou les couches de redistribution sont réalisées par dépôt physique en phase vapeur (Physical Vapor Deposition - PVD).

Des étapes ultérieures (non représentées) de découpe de la structure telle que décrite en relation avec la figure 13 et de collage des capots 316 pour obtenir les structures 318, puis d'insertion des fils d'antenne 322a, 322b pour obtenir les étiquettes RFID 300 (figure 3) sont ensuite exécutées.

La mise en œuvre pratique des étapes du procédé décrit ci-dessus en relation avec les figures 4 à 13 peut s'inspirer des procédés de mise sous boîtier au niveau de la plaquette, dits « FOWLP » (Fan-Out Wafer-Level Packaging), dans lesquels une plaquette est découpée afin de séparer des puces, ces puces étant ensuite repositionnées sur un support en ménageant un espace suffisant entre elles pour former des éléments de reprise de contact.

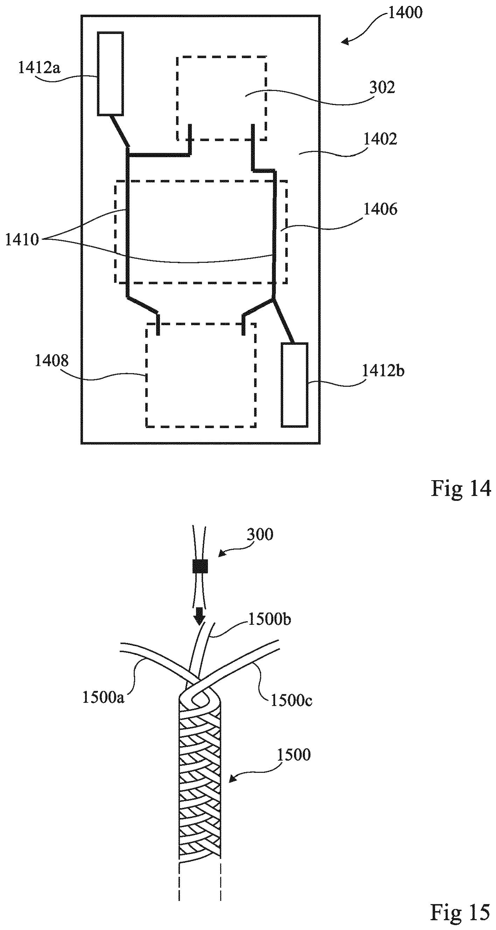

La figure 14 est une vue de dessus, schématique et partielle, d'un autre mode de réalisation d'une étiquette RFID 1400 vue de dessus. À des fins de clarté, le capot et les fils d'antenne de l'étiquette RFID 1400, qui sont respectivement analogues au capot 316 et aux fils 322a, 322b de l'étiquette 300 (figure 3), n'ont pas été représentés en figure 14.

Selon un mode de réalisation, l'étiquette RFID 1400 comporte un bloc de résine 1402 enrobant des composants 1406 et 1408 et une puce de radio-identification, par exemple la puce RFID 302 (figure 3). Selon un mode de réalisation :
le composant 1406 est un composant de stockage d'énergie, par exemple un composant capacitif ;
le composant 1408 est un capteur, par exemple un capteur de température, un capteur d'hygrométrie, un capteur de pression, etc. ; et
la puce RFID 302 intègre des fonctionnalités lui permettant d'enregistrer et/ou de traiter des données acquises par le capteur 1408.

Comme illustré en figure 14, des pistes conductrices 1410 en surface du bloc de résine 1402 permettent de connecter les composants 1406, 1408 et la puce 302 entre eux et à des éléments de reprise de contact 1412a et 1412b. Selon un mode de réalisation, le bloc de résine 1402 reçoit un capot analogue au capot 316 (figure 3) formant, avec le bloc 1402, deux encoches (non représentées) situées à l'aplomb des éléments de reprise de contact 1412a et 1412b et le long de l'étiquette RFID 1400. Dans ce cas, les éléments de reprise de contact 1412a et 1412b de l'étiquette RFID 1400 sont analogues aux éléments de reprise de contact 314a et 314b de l'étiquette RFID 300 (figure 3) à la différence que, en figure 14, les éléments de reprise de contact 1412a, 1412b sont décalés l'un par rapport à l'autre.

Dans le mode de réalisation illustré en figure 14, les composants 1406, 1408 et la puce 302 sont tous connectés entre eux et sont tous connectés aux éléments de reprise de contact 1412a et 1412b par l'intermédiaire des pistes conductrices 1410. Cela permet, par exemple, au composant 1406 de stockage d'énergie de prélever de l'énergie sur un champ capté par des fils d'antenne (non représentés) connectés aux éléments de reprise de contact 1412a et 1412b, de stocker cette énergie et de la redistribuer au composant 1408 et à la puce 302.

En variante, seuls certains éléments, parmi les composants 1406 et 1408 et la puce 302, sont connectés entre eux et/ou sont connectés aux éléments de reprise de contact 1412a et 1412b.

Selon un mode de réalisation, les pistes conductrices 1410 sont des éléments d'antenne.

Un avantage de l'étiquette RFID 1400 est de permettre de connecter plusieurs éléments, parmi les composants 1406 et 1408 et la puce 302, entre eux et/ou aux éléments de reprise de contact 1414a et 1414b. En d'autres termes, on tire profit de la présence du bloc de résine 1402 pour réaliser des interconnexions entre les composants 1406, 1408, la puce 302 et les éléments de reprise de contact 1412a et 1412b. Ces interconnexions sont, de préférence, réalisées par photolithogravure ce qui permet d'atteindre un niveau de précision élevé.

La figure 15 est une vue schématique d'un mode de mise en œuvre d'un procédé d'intégration d'une étiquette RFID, par exemple l'étiquette RFID 300, dans un fil textile 1500.

Selon ce mode de mise en œuvre, l'étiquette RFID 300 est intégrée au fil 1500 lors d'une étape de guipage du fil 1500 à partir de trois brins 1500a, 1500b et 1500c. Selon un mode de mise en œuvre, l'étiquette RFID 300 possède des dimensions réduites, de sorte que l'intégration de l'étiquette 300 dans le fil 1500 entraîne une augmentation peu visible à l'œil nu du diamètre du fil 1500. Cela permet ainsi de dissimuler l'étiquette 300 dans le fil textile 1500.

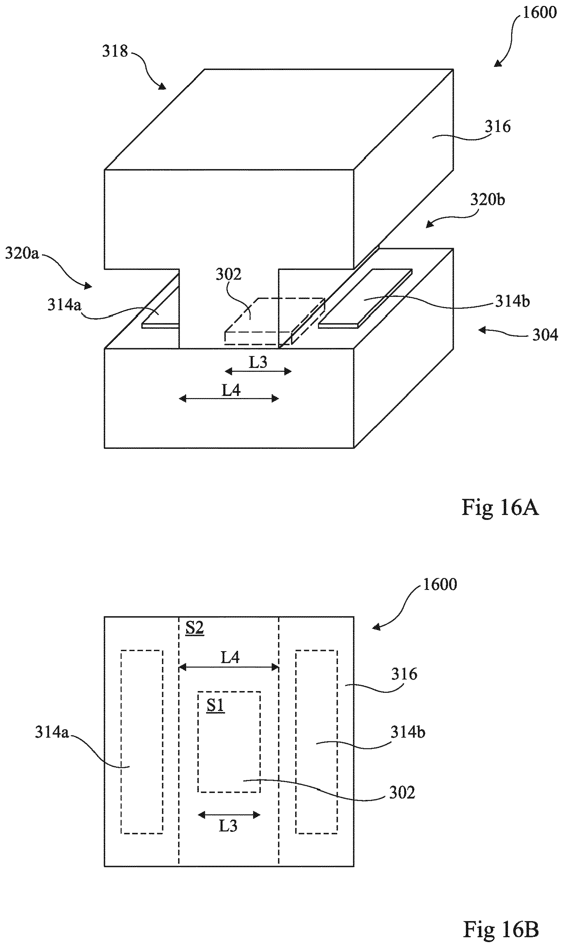

Les figures 16A et 16B sont des vues respectivement en perspective et de dessus, schématiques et partielles, d'un autre mode de réalisation d'une étiquette RFID 1600.

L'étiquette RFID 1600 des figures 16A et 16B comprend des éléments communs avec l'étiquette RFID 300 de la figure 3. Ces éléments communs ne seront pas détaillés à nouveau ci-après. L'étiquette RFID 1600 des figures 16A et 16B diffère de l'étiquette RFID 300 de la figure 3 principalement en ce que la puce RFID 302 de l'étiquette 1600 présente une dimension latérale L3 inférieure à une dimension latérale L4 de la partie inférieure du capot. Dans l'exemple représenté, la puce 302 présente une face supérieure de surface S1 plus petite qu'une surface S2 de contact du capot 316 avec le bloc de résine 304.

Dans le cas de l'étiquette RFID 1600, les plots 106a et 106b de connexion de la puce 102 (non visibles en figures 16A et 16B) sont par exemple connectés aux éléments de reprise de contact 314a et 314b par des pistes conductrices (non représentées) ou par d'autres éléments de reprise de contact (non représentés). La personne du métier est capable de prévoir des moyens de connexion adéquats entre chaque plot 106a, 106b et l'élément de reprise de contact 314a, 314b associé pour réaliser l'étiquette RFID 1600.

Le mode de réalisation de l'étiquette RFID 1600 exposé ci-dessus en relation avec les figures 16a et 16b permet avantageusement de réaliser une structure 318 analogue à celle de l'étiquette RFID 300 dans des cas où la puce 302 présente par exemple une surface supérieure S1 trop petite par rapport à la surface de contact S2 permettant de garantir la fixation du capot 316. En particulier, l'étiquette RFID 1600 présente une robustesse mécanique adaptée aux applications précitées quelles que soient les dimensions de la puce 302, notamment sa surface S1, par rapport aux dimensions du capot 316.

Divers modes de réalisation, modes de mise en œuvre et variantes ont été décrits. L'homme de l'art comprendra que certaines caractéristiques de ces divers modes de réalisation, modes de mise en œuvre et variantes pourraient être combinées, et d'autres variantes apparaîtront à l'homme de l'art. En particulier, l'adaptation du mode de mise en œuvre du procédé de réalisation d'étiquettes RFID décrit en relation avec les figures 4 à 13 pour réaliser les étiquettes RFID 300, 1400 et 1600 est à la portée de l'homme du métier à partir des indications ci-dessus.

Enfin, la mise en œuvre pratique des modes de réalisation, modes de mise en œuvre et variantes décrits est à la portée de l'homme du métier à partir des indications fonctionnelles données ci-dessus. En particulier, la réalisation des couches de redistribution permettant d'obtenir les éléments de reprise de contact 314a et 314b des étiquettes 300 et 1600 ainsi que les éléments de reprise de contact 1412a et 1412b et les pistes conductrices 1410 de l'étiquette 1400 sont à la portée de l'homme du métier à partir des indications ci-dessus.

## Revendications

1. Dispositif électronique (318) comprenant :
au moins une puce de radio-identification (302), enrobée par un bloc de résine (304 ; 1402) ;
un capot (316) sur et en contact avec une couche de passivation (312) située en surface du bloc de résine, le capot formant, avec le bloc de résine, au moins une encoche (320a, 320b) ; et
au moins un élément de reprise de contact (314a, 314b ; 1412a, 1412b), situé en surface du bloc de résine à l'intérieur de l'encoche,
chaque encoche étant destinée à recevoir un fil conducteur (322a, 322b), contactant le ou les éléments de reprise de contact.

2. Dispositif selon la revendication 1, dans lequel la puce (302) est revêtue, sur toutes ses faces, par le bloc de résine (304 ; 1402) et la couche de passivation (312), à l'exception de zones de contact avec les éléments de reprise de contact (314a, 314b ; 1412a, 1412b).

3. Dispositif selon la revendication 1 ou 2, dans lequel le capot (316) et le bloc de résine (304 ; 1402) forment conjointement deux encoches (320a, 320b) comportant chacune au moins un élément de reprise de contact (314a, 314b ; 1412a, 1412b), le capot présentant, selon un plan de coupe perpendiculaire à la longueur des encoches, une section en forme de « T ».

4. Dispositif selon la revendication 1, 2 ou 3, dans lequel le capot (316) est en silicium.

5. Dispositif selon l'une quelconque des revendications 1 à 4, dans lequel le bloc de résine (304 ; 1402) est en au moins un matériau polymère.

6. Dispositif selon l'une quelconque des revendications 1 à 5, dans lequel la puce (302) présente :
une longueur comprise entre 300 et 500 µm ;
une largeur comprise entre 300 et 500 µm ; et
une épaisseur comprise entre 50 et 100 µm.

7. Dispositif selon l'une quelconque des revendications 1 à 6, dans lequel le bloc de résine (304 ; 1402) permet d'agrandir une surface de fixation du capot (316).

8. Dispositif selon l'une quelconque des revendications 1 à 7, dans lequel le bloc de résine (304 ; 1402) permet de déporter latéralement des plots de connexion (308a, 308b) de la puce de radio-identification (302).

9. Dispositif selon l'une quelconque des revendications 1 à 8, dans lequel la puce (302) présente une face supérieure de surface (S1) plus petite qu'une surface (S2) de contact du capot (316) avec le bloc de résine (304 ; 1402).

10. Étiquette de radio-identification (300 ; 1400 ; 1600) comportant :
au moins un dispositif (318) selon l'une quelconque des revendications 1 à 9 ; et
au moins un fil conducteur (322a, 322b), engagé à l'intérieur de la ou des encoches (320a, 320b).

11. Étiquette selon la revendication 10, dans laquelle le ou les fils conducteurs (320a, 320b) forment une ou des antennes de la puce de radio-identification (302).

12. Fil textile (1500) comprenant au moins une étiquette de radio-identification (300 ; 1400 ; 1600) selon la revendication 11.

13. Procédé de fabrication d'un dispositif (318) selon l'une quelconque des revendications 1 à 9.

14. Procédé selon la revendication 13, comprenant les étapes de :
positionner au moins une puce de radio-identification (302) sur un premier support (402) ;
enrober la puce de radio-identification dans un bloc de résine (304 ; 1402) ;
reporter la puce sur un deuxième support (900) à l'aide du premier support ;
mettre à nu des zones actives de la puce de radio-identification ;
déposer une couche diélectrique (312) en surface du bloc de résine ;
réaliser au moins un plot de connexion (308a, 308b) et au moins un élément de reprise de contact (314a, 314b ; 1412a, 1412b) ; et
coller un capot (316) à l'aplomb du bloc de résine, de sorte à former au moins une encoche (320a, 320b) au niveau de l'élément de reprise de contact.
